# EUROPÄISCHE PATENTSCHRIFT

(11) **EP 2 680 995 B1**
(45) Veröffentlichungstag und Bekanntmachung des Hinweises auf die Patenterteilung: **10.02.2016**
(21) Anmeldenummer: 12716216.2
(22) Anmeldetag: 02.03.2012
(51) Int. Cl.: B23D 57/02, B27B 17/02

(54) **TRAGBARE WERKZEUGMASCHINE**
PORTABLE MACHINE TOOL
MACHINE-OUTIL PORTATIVE

(30) Priorität: 03.03.2011 DE 102011005036
(43) Veröffentlichungstag der Anmeldung: 08.01.2014
(73) Patentinhaber: Robert Bosch GmbH, 70469 Stuttgart (DE)
(72) Erfinder: FUCHS, Rudolf, 73765 Neuhausen (DE)
(86) Internationale Anmeldenummer: PCT/EP2012/000916
(87) Internationale Veröffentlichungsnummer: WO 2012/116827

(56) Entgegenhaltungen:
- EP-A1- 0 621 821
- EP-A2- 0 062 188
- GB-A- 2 042 974
- US-A- 2 348 612
- US-A- 2 649 871
- US-A- 2 992 660
- US-A- 3 537 347
- US-A- 4 382 334
- US-A- 6 038 775

## Beschreibung

### Stand der Technik

Es sind bereits aus der US 2 348 612 A und der EP 0 062 188 A2 tragbare Werkzeugmaschinen bekannt, die ein Werkzeugmaschinengehäuse und eine Kopplungsvorrichtung aufweisen. Die Kopplungsvorrichtung ist hierbei zur Kopplung mit einer zumindest einen Schneidstrang und zumindest eine Führungseinheit zur Führung des Schneidstrangs umfassende Werkzeugmaschinentrennvorrichtung vorgesehen. Ferner weisen diese tragbaren Werkzeugmaschinen zumindest eine Werkzeugstabilisierungsvorrichtung auf, die in einem außerhalb der Kopplungsvorrichtung angeordneten Bereich zumindest ein Stabilisierungselement mit zumindest einer Abstützfläche zur Stabilisierung der Werkzeugmaschinentrennvorrichtung umfasst.

### Offenbarung der Erfindung

Die Erfindung geht aus von einer tragbaren Werkzeugmaschine, insbesondere von einer Handwerkzeugmaschine, mit einem Werkzeugmaschinengehäuse, mit zumindest einer Kopplungsvorrichtung, die zur Kopplung mit einer zumindest einen Schneidstrang und zumindest eine Führungseinheit zur Führung des Schneidstrangs umfassende Werkzeugmaschinentrennvorrichtung vorgesehen ist, und mit zumindest einer Werkzeugstabilisierungsvorrichtung, die in einem außerhalb der Kopplungsvorrichtung angeordneten Bereich zumindest ein Stabilisierungselement mit zumindest einer Abstützfläche zur Stabilisierung der Werkzeugmaschinentrennvorrichtung aufweist.

Gemäß der Erfindung wird vorgeschlagen, dass die Werkzeugstabilisierungsvorrichtung linear beweglich am Werkzeugmaschinengehäuse gelagert ist und die Werkzeugstabilisierungsvorrichtung zumindest ein weiteres Stabilisierungselement mit zumindest einer Abstützfläche aufweist, das zusammen mit dem Stabilisierungselement einen Stabilisierungsbereich begrenzt. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner

als 5 kg. Unter einer "Kopplungsvorrichtung" soll hier insbesondere eine Vorrichtung verstanden werden, die dazu vorgesehen ist, die Werkzeugmaschinentrennvorrichtung mittels einer formschlüssigen und/oder kraftschlüssigen Verbindung zur Bearbeitung eines Werkstücks mit der tragbaren Werkzeugmaschine wirkungsmäßig zu verbinden. Insbesondere können in einem mit der Werkzeugmaschinentrennvorrichtung gekoppelten Zustand der Kopplungsvorrichtung in einem Betriebszustand der tragbaren Werkzeugmaschine Kräfte und/oder Drehmomente von der Antriebseinheit der tragbaren Werkzeugmaschine zum Antrieb des Schneidstrangs an die Werkzeugmaschinentrennvorrichtung übertragen werden. Somit ist die Kopplungsvorrichtung vorzugsweise als Werkzeugaufnahme ausgebildet. Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Unter "vorgesehen" soll hier insbesondere speziell ausgelegt und/oder speziell ausgestattet verstanden werden. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders bevorzugt wird der Schneidstrang in zumindest einem Betriebszustand umlaufend bewegt, insbesondere entlang eines Umfangs der Führungseinheit.

Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt. Vorzugsweise ist die Führungseinheit als Schwert ausgebildet. Der Begriff "Schwert" soll hier insbesondere eine geometrische Form definieren, die, in der Schneidebene betrachtet, eine in sich geschlossene Außenkontur aufweist, die zumindest zwei zueinander parallel verlaufende Geraden und zumindest zwei jeweils sich zugewandte Enden der Geraden miteinander verbindende Verbindungsabschnitte, insbesondere Kreisbögen, umfasst. Somit weist die Führungseinheit eine geometrische Form auf, die sich, in der Schneidebene betrachtet, aus einem Rechteck und zumindest zwei an sich gegenüberliegenden Seiten des Rechtecks angeordneten Kreissektoren zusammensetzt. Der Begriff "Schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer tragbaren Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind. Unter einer "Werkzeugstabilisierungsvorrichtung" soll hier insbesondere eine Vorrichtung verstanden werden, die dazu vorgesehen ist, zumindest eine Stützkraft entlang einer zumindest im Wesentlichen senkrecht zur Schneidebene des Schneidstrangs verlaufenden Richtung während einer Bearbeitung eines Werkstücks auf die Werkzeugmaschinentrennvorrichtung, insbesondere auf die Führungseinheit, zur Stabilisierung, insbesondere zur Vermeidung und/oder zur Reduzierung einer Durchbiegung der Führungseinheit, auszuüben. Besonders bevorzugt übt die Werkzeugstabilisierungsvorrichtung in einem Teilbereich der Werkzeugmaschinentrennvorrichtung, insbesondere der Führungseinheit, eine Stützkraft auf die Werkzeugmaschinentrennvorrichtung, insbesondere auf die Führungseinheit, aus, der bei einer Bearbeitung, entlang einer von der tragbaren Werkzeugmaschine abgewandten Richtung betrachtet, zwischen einem Werkzeugmaschinengehäuse und einer Oberfläche eines zu bearbeitenden Werkzeugs angeordnet ist.

Unter einem "außerhalb der Kopplungsvorrichtung angeordneten Bereich" soll hier insbesondere ein Bereich der tragbaren Werkzeugmaschine, insbesondere eines Werkzeugmaschinengehäuses, verstanden werden, der zumindest mehr als 1 cm, bevorzugt mehr als 3 cm und besonders bevorzugt zumindest mehr als 6 cm beabstandet von einer Rotationsachse eines Abtriebselements einer Antriebseinheit und/oder einer Getriebeeinheit der tragbaren Werkzeugmaschine zum Antrieb des Schneidstrangs angeordnet ist und/oder es soll hier insbesondere ein Bereich der Werkzeugmaschinentrennvorrichtung, insbesondere der Führungseinheit, verstanden werden, der nicht direkt im Eingriff von Kopplungsgliedern der Kopplungsvorrichtung ist und/oder der nicht direkt an den Kopplungsgliedern zu einer formschlüssigen und/oder kraftschlüssigen Verbindung der Werkzeugmaschinentrennvorrichtung anliegt. Der Begriff "Stabilisierung" soll hier insbesondere eine Einwirkung zumindest einer Zwangskraft ausgehend von der Werkzeugstabilisierungsvorrichtung auf die Werkzeugmaschinentrennvorrichtung, insbesondere auf die Führungseinheit, in einem mit der Kopplungsvorrichtung gekoppelten Zustand der Werkzeugmaschinentrennvorrichtung definieren, die dazu vorgesehen ist, eine Abweichung einer Ausrichtung der Werkzeugmaschinentrennvorrichtung, insbesondere einer Längsachse der Führungseinheit, von einer vorgegeben Ausrichtung der Werkzeugmaschinentrennvorrichtung, insbesondere der Führungseinheit, zumindest weitestgehend zu verhindern. Unter einer "Zwangskraft" soll hier insbesondere eine Kraft verstanden werden, die dazu vorgesehen ist, einen Körper an einer Bewegung in zumindest eine Richtung zu hindern und/oder den Körper bei einer Bewegung auf einer mittels einer Einwirkung der Kraft auf den Körper vorgegebenen Bahn zu halten.

Vorzugsweise ist die Werkzeugmaschinentrennvorrichtung in einem mit der Kopplungsvorrichtung gekoppelten Zustand zumindest teilweise in dem Stabilisierungsbereich angeordnet. Besonders bevorzugt ist die Werkzeugmaschinentrennvorrichtung, insbesondere die Führungseinheit, in einem mit der Kopplungsvorrichtung gekoppelten Zustand entlang einer zumindest im Wesentlichen senkrecht zu einer Schneidebene des Schneidstrangs verlaufenden Richtung zumindest teilweise zwischen dem Stabilisierungselement und dem weiteren Stabilisierungselementen der Werkzeugstabilisierungsvorrichtung angeordnet ist. Der Ausdruck "zwischen" soll hier insbesondere eine räumliche Anordnung eines Bauteils entlang zumindest einer Richtung zwischen zwei Teilbereichen eines weiteren Bauteils oder zwischen zwei weiteren Bauteilen definieren, wobei vorzugsweise zumindest eine Gerade entlang der Richtung existiert, die das Bauteil und die beiden Teilbereiche des weiteren Bauteils oder das Bauteil und die zwei weiteren Bauteile schneidet. Vorteilhafterweise liegt zumindest die Führungseinheit zumindest in einem Teilbereich der Führungseinheit an den zumindest zwei Stabilisierungselementen an. Bevorzugt liegt jeweils eine von zwei Außenflächen der Führungseinheit in einem Teilbereich direkt an jeweils einer der Führungseinheit zugewandten Seitenwand eines der Stabilisierungselemente an. Vorzugsweise liegt jede Außenfläche jeweils mit mehr als 10 % eines gesamten Flächeninhalts der Außenfläche, bevorzugt mit mehr als 20 % und besonders bevorzugt mit mehr als 30 % an der der Führungseinheit zugewandten Seitenwand eines der Stabilisierungselementen an. Insbesondere liegen die Außenflächen in einem Teilbereich der Führungseinheit an den Kopplungselementen an, der zumindest mehr als 5 %, bevorzugt mehr als 10 % und besonders bevorzugt zumindest mehr als 15 % von einer Gesamtlänge der Führungseinheit beabstandet zu einem Drehmomenteinleitungspunkt zum Antrieb des Schneidstrangs angeordnet ist. Somit sind die Stabilisierungselemente vorzugsweise dazu vorgesehen, die Werkzeugmaschinentrennvorrichtung, insbesondere die Führungseinheit, zumindest in zwei entgegengesetzt gerichtete Richtungen zu stabilisieren und/oder zu stützen. Mittels der erfindungsgemäßen Ausgestaltung kann vorteilhaft ein komfortables Arbeiten mittels der Werkzeugmaschinentrennvorrichtung erreicht werden. Zudem kann vorteilhaft insbesondere eine Durchbiegung der Führungseinheit bei einer Bearbeitung eines Werkstücks vorteilhaft verhindert werden. Es kann vorteilhaft eine beidseitige Stabilisierung der Werkzeugmaschinentrennvorrichtung, insbesondere der Führungseinheit, realisiert werden. Ferner kann besonders vorteilhaft eine hohe Seitenstabilität der Werkzeugmaschinentrennvorrichtung, insbesondere der Führungseinheit, bei einer Bearbeitung von Werkstücken erreicht werden.

Ferner wird vorgeschlagen, dass die tragbare Werkzeugmaschine zumindest eine Auflageeinheit zur Auflage auf ein Werkstück aufweist. Unter einer "Auflageeinheit" soll hier insbesondere eine Einheit verstanden werden, die während einer Bearbeitung eines Werkstücks mittels der tragbaren Werkzeugmaschine bei einer ordnungsgemäßen Handhabung der tragbaren Werkzeugmaschine, auf dem Werkstück aufliegt, insbesondere mit der Auflagefläche der Auflageeinheit, und die dazu vorgesehen ist, die tragbare Werkzeugmaschine während einer Bearbeitung des Werkstücks auf dem Werkstück abzustützen. Besonders bevor-_ zugt ist die Auflageeinheit als Gleitschuh und/oder als Grundplatte ausgebildet. Vorzugsweise gleitet die tragbare Werkzeugmaschine während einer Bearbeitung des Werkstücks mittels der Auflageeinheit, insbesondere mit der Auflagefläche der Auflageeinheit, auf einer Oberfläche des zu bearbeitenden Werkstücks. Es kann vorteilhaft eine Führung der tragbaren Werkzeugmaschine während einer Bearbeitung eines Werkstücks erreicht werden. Ferner kann vorteilhaft ein hoher Bedienkomfort für einen Bediener bei einer Bearbeitung eines Werkstücks mittels der tragbaren Werkzeugmaschine erreicht werden.

Vorzugsweise weist das Stabilisierungselement und/oder das weitere Stabilisierungselement eine Erstreckung auf, die, entlang einer zumindest im Wesentlichen senkrecht zu einer Auflagefläche der Auflageeinheit betrachtet, zumindest im Wesentlichen bündig mit der Auflagefläche abschließt. Besonders bevorzugt weist das Stabilisierungselement und/oder das weitere Stabilisierungselement eine Erstreckung auf, die, entlang einer von der tragbaren Werkzeugmaschine, insbesondere von einem Werkzeugmaschinengehäuse der tragbaren Werkzeugmaschine, abgewandte Richtung betrachtet, zumindest im Wesentlichen bündig mit einer Auflagefläche der Auflageeinheit abschließt. Unter "zumindest im Wesentlichen bündig abschließen" soll hier insbesondere eine Anordnung des Stabilisierungselement und/oder des weiteren Stabilisierungselements in einem montierten Zustand verstanden werden, wobei sich das Stabilisierungselement und/oder das weitere Stabilisierungselement in einem montierten Zustand, entlang einer Längsachse des Stabilisierungselement und/oder des weiteren Stabilisierungselements betrachtet, ausgehend von einem Werkzeugmaschinengehäuse in Richtung der Auflagefläche der Auflageeinheit erstreckt und sich maximal bis zur Auflagefläche der Auflageeinheit erstreckt.

Zudem wird vorgeschlagen, dass die Werkzeugstabilisierungsvorrichtung zumindest ein Federelement aufweist, das dazu vorgesehen ist, zumindest das Stabilisierungselement und/oder das weitere Stabilisierungselement mit einer Federkraft zu beaufschlagen. Unter einem "Federelement" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Mittels der erfindungsgemäßen Ausgestaltung kann vorteilhaft eine Anpassung des Stabilisierungselements und/oder des weiteren Stabilisierungselements an eine Schnitttiefe der Werkzeugmaschinentrennvorrichtung, insbesondere des Schneidstrangs, erreicht werden.

Ferner geht die Erfindung aus von einem Werkzeugmaschinensystem mit zumindest einer erfindungsgemäßen tragbaren Werkzeugmaschine und mit zumindest einer Werkzeugmaschinentrennvorrichtung, die zumindest einen Schneidstrang und zumindest eine Führungseinheit zur Führung des Schneidstrangs, die zumindest zusammen mit dem Schneidstrang ein geschlossenes System bildet, aufweist, wobei die Werkzeugstabilisierungsvorrichtung dazu vorgesehen ist, die Werkzeugmaschinentrennvorrichtung in einem mit der Kopplungsvorrichtung gekoppelten Zustand, entlang einer von der tragbaren Werkzeugmaschine abgewandten Richtung betrachtet, in einem außerhalb der Kopplungsvorrichtung angeordneten Bereich der Werkzeugmaschinentrennvorrichtung entlang einer zumindest im Wesentlichen senkrecht zu einer Schneidebene des Schneidstrangs verlaufenden Richtung zu stabilisieren, und wobei jeweils eine von zwei Außenflächen der Führungseinheit in einem Teilbereich direkt an jeweils einer der Führungseinheit zugewandten Seitenwand eines der Stabilisierungselemente anliegt, und wobei jede Außenfläche der Führungseinheit jeweils mit mehr als 10 % eines gesamten Flächeninhalts der Außenfläche der Führungseinheit an der der Führungseinheit zugewandten Seitenwand eines der Stabilisierungselemente anliegt. Die Werkzeugmaschinentrennvorrichtung umfasst zumindest einen Schneidstrang und zumindest eine Führungseinheit, die zumindest zusammen mit dem Schneidstrang ein geschlossenes System bildet. Vorteilhafterweise weist die Werkzeugmaschinentrennvorrichtung zumindest ein Drehmomentübertragungselement zum Antrieb des Schneidstrangs auf, das zumindest teilweise in der Führungseinheit gelagert ist. Bevorzugt ist das Drehmomentübertragungselement zumindest teilweise entlang zumindest einer Richtung von Außenwänden der Führungseinheit umgeben. Bevorzugt weist das Drehmomentübertragungselement eine konzentrische Kopplungsausnehmung auf, in die ein Ritzel der Motoreinheit und/oder ein Zahnrad und/oder eine verzahnte Welle der Getriebeeinheit in einem montierten Zustand eingreifen kann. Die Kopplungsausnehmung wird hierbei bevorzugt von einem Innensechskant gebildet. Es ist jedoch auch denkbar, dass die Kopplungsausnehmung eine andere, einem Fachmann als sinnvoll erscheinende Ausgestaltung aufweist. Mittels der Ausgestaltung der Werkzeugmaschinentrennvorrichtung kann konstruktiv einfach ein geschlossenes System erreicht werden, das komfortabel von einem Bediener an einer dazu vorgesehenen Werkzeugmaschine montierbar ist. Es kann somit vorteilhaft auf eine Einzelmontage von Komponenten, wie beispielsweise des Schneidstrangs, der Führungseinheit und des Drehmomentübertragungselements, durch den Bediener zum Gebrauch der Werkzeugmaschinentrennvorrichtung verzichtet werden.

Bevorzugt weist der Schneidstrang zumindest ein Schneidenträgerelement auf, das auf einer dem Drehmomentübertragungselement zugewandten Seite des Schneidenträgerelements zumindest eine Ausnehmung aufweist, in die das Drehmomentübertragungselement in zumindest einem Betriebszustand zum Antrieb des Schneidstrangs eingreift. Das Drehmomentübertragungselement ist hierbei bevorzugt als Zahnrad ausgebildet, das entlang einer in einer sich senkrecht zur Rotationsachse erstreckenden Ebene verlaufenden Umfangsrichtung eine Vielzahl an Zähnen zum Antrieb des Schneidstrangs aufweist. Die Ausnehmung des Schneidenträgerelements ist bevorzugt korrespondierend mit einer Außenkontur der Zähne des als Zahnrad ausgebildeten Drehmomentübertragungselements ausgebildet. Es ist jedoch auch denkbar, dass das Drehmomentübertragungselement und/oder das Schneidenträgerelement eine andere, einem Fachmann als sinnvoll erscheinende Ausgestaltung aufweist.

Mittels der erfindungsgemäßen Ausgestaltung des Werkzeugmaschinensystems kann vorteilhaft eine hohe Seitenstabilität der Werkzeugmaschinentrennvorrichtung, insbesondere der Führungseinheit, bei einer Bearbeitung eines Werkstücks erreicht werden.

Die Werkzeugmaschinentrennvorrichtung und/oder die erfindungsgemäße tragbare Werkzeugmaschine sollen hierbei nicht auf die oben beschriebene Anwendung und Ausführungsform beschränkt sein. Insbesondere kann die Werkzeugmaschinentrennvorrichtung und/oder die erfindungsgemäße tragbare Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine nicht erfindungsgemäße tragbare Werkzeugmaschine mit einer Werkzeugmaschinentrennvorrichtung in einer schematischen Darstellung,
- Fig. 2: eine Detailansicht einer Werkzeugstabilisierungsvorrichtung der nicht erfindungsgemäßen tragbaren Werkzeugmaschine in einer schematischen Darstellung,
- Fig. 3: eine Detailansicht einer Werkzeugmaschinentrennvorrichtung in einer schematischen Darstellung,
- Fig. 4: eine Schnittansicht entlang der Linie IV-IV aus Figur 3 der Werkzeugmaschinentrennvorrichtung in einer schematischen Darstellung,
- Fig. 5: eine Detailansicht von Schneidenträgerelementen eines Schneidstrangs der Werkzeugmaschinentrennvorrichtung in einer schematischen Darstellung,
- Fig. 6: eine weitere Detailansicht eines der Schneidenträgerelemente des Schneidstrangs der Werkzeugmaschinentrennvorrichtung in einer schematischen Darstellung,
- Fig. 7: eine Detailansicht einer Anordnung der Schneidenträgerelemente in einer Führungseinheit der Werkzeugmaschinentrennvorrichtung in einer schematischen Darstellung,
- Fig. 8: eine erfindungsgemäße tragbare Werkzeugmaschine mit einer alternativen Werkzeugstabilisierungsvorrichtung in einer schematischen Darstellung und
- Fig. 9: eine Detailansicht der alternativen Werkzeugstabilisierungsvorrichtung der erfindungsgemäßen tragbaren Werkzeugmaschine in einer schematischen Darstellung.

### Beschreibung des Ausführungsbeispiels

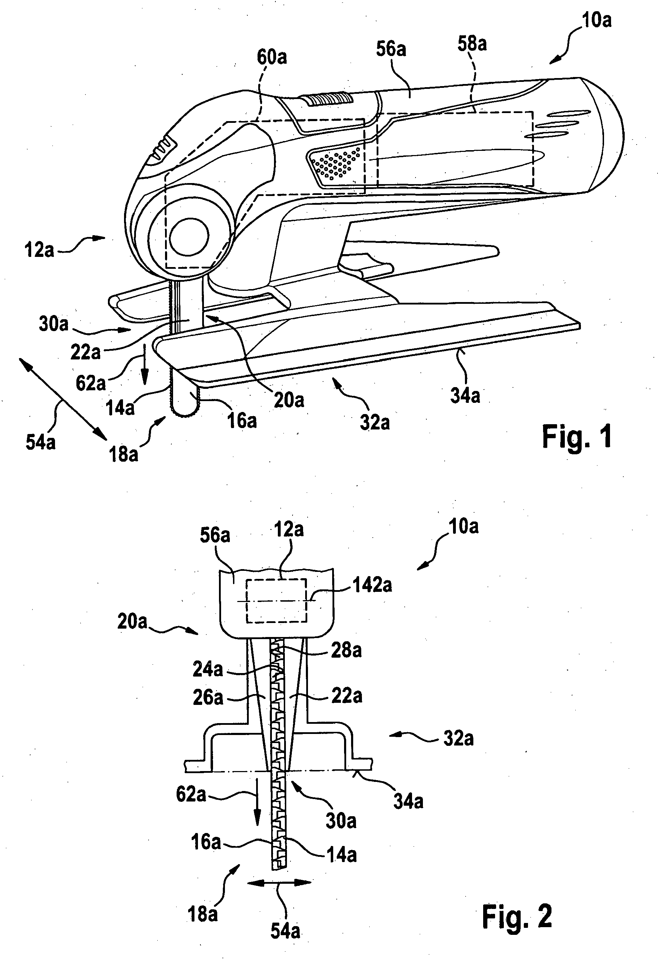

Figur 1 zeigt insbesondere zu einer Erläuterung einer Funktionsweise und einer Ausgestaltung der erfindungsgemäßen tragbaren Werkzeugmaschine 10b eine nicht erfindungsgemäße tragbare Werkzeugmaschine 10a mit einer Werkzeugmaschinentrennvorrichtung 18a, die zusammen ein nicht erfindungsgemäßes Werkzeugmaschinensystem bilden. Die tragbare Werkzeugmaschine 10a weist eine Kopplungsvorrichtung 12a zur formschlüssigen und/oder kraftschlüssigen Kopplung mit der Werkzeugmaschinentrennvorrichtung 18a auf. Die Kopplungsvorrichtung 12a kann hierbei als Bajonettverschluss und/oder als eine andere, einem Fachmann als sinnvoll erscheinende Kopplungsvorrichtung ausgebildet sein. Ferner weist die tragbare Werkzeugmaschine 10a ein Werkzeugmaschinengehäuse 56a auf, das eine Antriebseinheit 58a und eine Getriebeeinheit 60a der tragbaren Werkzeugmaschine 10a umschließt. Die Antriebseinheit 58a und die Getriebeeinheit 60a sind zur Erzeugung eines auf die Werkzeugmaschinentrennvorrichtung 18a übertragbaren Antriebsmoments auf eine, einem Fachmann bereits bekannte Art und Weise wirkungsmäßig miteinander verbunden. Hierbei sind die Antriebseinheit 58a und/oder die Getriebeeinheit 60a dazu vorgesehen, in einem montierten Zustand mittels der Kopplungsvorrichtung 12a mit einem Schneidstrang 14a der Werkzeugmaschinentrennvorrichtung 18a gekoppelt zu werden. Die Getriebeeinheit 60a der tragbaren Werkzeugmaschine 10a ist als Winkelgetriebe ausgebildet. Die Antriebseinheit 58a ist als Elektromotoreinheit ausgebildet. Es ist jedoch auch denkbar, dass die Antriebseinheit 58a und/oder die Getriebeeinheit 60a eine andere, einem Fachmann als sinnvoll erscheinende Ausgestaltung aufweisen. Die Antriebseinheit 58a ist dazu vorgesehen, den Schneidstrang 14a der Werkzeugmaschinentrennvorrichtung 18a in zumindest einem Betriebszustand mit einer Schnittgeschwindigkeit kleiner als 6 m/s anzutreiben. Hierbei weist die tragbare Werkzeugmaschine 10a zumindest einen Betriebsmodus auf, in dem ein Antrieb des Schneidstrangs 14a in einer Führungseinheit 16a der Werkzeugmaschinentrennvorrichtung 18a entlang einer Schneidrichtung 62a des Schneidstrangs 14a mit einer Schnittgeschwindigkeit kleiner als 6 m/s ermöglicht wird. Ferner umfasst die tragbare Werkzeugmaschine 10a eine Auflageeinheit 32a zur Auflage auf ein mittels der tragbaren Werkzeugmaschine 10a zu bearbeitendes Werkstück (hier nicht näher dargestellt). Die Auflageeinheit 32a ist als Gleitschuh und/oder als Grundplatte ausgebildet, mittels dem und/oder derer die tragbare Werkzeugmaschine 10a bei einer ordnungsgemäßen Handhabung während einer Bearbeitung eines Werkstücks auf dem Werkstück gleitet und/oder abgestützt wird.

Des Weiteren umfasst die tragbare Werkzeugmaschine 10a eine Werkzeugstabilisierungsvorrichtung 20a, die in einem außerhalb der Kopplungsvorrichtung 12a angeordneten Bereich zumindest ein Stabilisierungselement 22a mit einer Abstützfläche 24a (Figur 2) zur Stabilisierung der Werkzeugmaschinentrennvorrichtung 18a aufweist. Die Abstützfläche 24a des Stabilisierungselements 22a ist in einem mit der Kopplungsvorrichtung 12a gekoppelten Zustand der Werkzeugmaschinentrennvorrichtung 18a auf einer der Führungseinheit 16a zugewandten Seite des Stabilisierungselements 22a angeordnet. Die Werkzeugstabilisierungsvorrichtung 20a umfasst ferner ein weiteres Stabilisierungselement 26a mit einer Abstützfläche 28a, das zusammen mit dem Stabilisierungselement 22a einen Stabilisierungsbereich 30a zur Stabilisierung der Werkzeugmaschinentrennvorrichtung 18a begrenzen. Das weitere Stabilisierungselement 26a ist ebenfalls in dem außerhalb der Kopplungsvorrichtung 12a angeordneten Bereich angeordnet. Die weitere Abstützfläche 28a des weiteren Stabilisierungselements 26a ist in einem mit der Kopplungsvorrichtung 12a gekoppelten Zustand der Werkzeugmaschinentrennvorrichtung 18a auf einer der Führungseinheit 16a zugewandten Seite des weiteren Stabilisierungselements 26a angeordnet. Die Abstützfläche 24a des Stabilisierungselements 22a und die weitere Abstützfläche 28a des weiteren Stabilisierungselements 26a verlaufen zumindest im Wesentlichen parallel zur Schneidebene des Schneidstrangs 14a. Das Stabilisierungselement 22a und das weitere Stabilisierungselement 26a sind einstückig mit dem Werkzeugmaschinengehäuse 56a ausgebildet. Somit ist die Werkzeugstabilisierungsvorrichtung 20a dazu vorgesehen ist, die Führungseinheit 16a der Werkzeugmaschinentrennvorrichtung 18a in einem mit der Kopplungsvorrichtung 12a gekoppelten Zustand, entlang einer von der tragbaren Werkzeugmaschine 10a abgewandten Richtung betrachtet, in einem außerhalb der Kopplungsvorrichtung 12a angeordneten Bereich der Werkzeugmaschinentrennvorrichtung 18a entlang einer zumindest im Wesentlichen senkrecht zu einer Schneidebene des Schneidstrangs 14a verlaufenden Richtung 54a zu stabilisieren. Hierbei liegt die Führungseinheit 16a an der Abstützfläche 24a des Stabilisierungselements 22a und an der weiteren Abstützfläche 28a des weiteren Stabilisierungselements 26a an.

Figur 2 zeigt eine Anordnung der Werkzeugstabilisierungsvorrichtung 20a an dem Werkzeugmaschinengehäuse 56a der tragbaren Werkzeugmaschine 10a. Die Werkzeugstabilisierungsvorrichtung 20a ist, entlang einer vom Werkzeugmaschinengehäuse 56a abgewandten Richtung betrachtet, beabstandet zu einer Rotationsachse 142a eines Abtriebselements der Antriebseinheit 58a und/oder der Getriebeeinheit 60a zum Antrieb des Schneidstrangs 14a in einem mit der Kopplungsvorrichtung 12a gekoppelten Zustand der Werkzeugmaschinentrennvorrichtung 18a am Werkzeugmaschinengehäuse 56a angeordnet. Die Werkzeugmaschinentrennvorrichtung 18a ist in einem gekoppelten Zustand mit der Kopplungsvorrichtung 12a mit einem Teilbereich, entlang einer zumindest im Wesentlichen senkrecht zur Schneidebene des Schneidstrangs 14a verlaufenden Richtung betrachtet, zwischen dem Stabilisierungselement 22a und dem weiteren Stabilisierungselement 26a angeordnet. Das Stabilisierungselement 22a und das weitere Stabilisierungselement 26a weisen jeweils eine Erstreckung auf, die, ausgehend von dem Werkzeugmaschinengehäuse 56a entlang einer zumindest im Wesentlichen senkrecht zu einer Auflagefläche 34a der Auflageeinheit 32a betrachtet, zumindest im Wesentlichen bündig mit der Auflagefläche 34a abschließen. Die Auflagefläche 34a der Auflageeinheit 32a liegt bei einer Bearbeitung eines Werkstücks auf einer Oberfläche (hier nicht näher dargestellt) des Werkstücks auf. Das Stabilisierungselement 22a und das weitere Stabilisierungselement 26a liegen bei einer Bearbeitung eines Werkstücks jeweils mit einer dem Werkstück zugewandten Seite auf der Oberfläche des Werkstücks an. Somit sind das Stabilisierungselement 22a und das weitere Stabilisierungselement 26a bei einer Bearbeitung eines Werkstücks zusätzlich zur Stabilisierung der Führungseinheit 16a dazu vorgesehen, ein Ausreißen von Spänen im Bereich von Schnittkanten eines mittels des Schneidstrangs 14a einbringbaren Schnitts bei einer Bearbeitung eines Werkstücks zu vermeiden.

Ferner stabilisieren das Stabilisierungselement 22a und das weitere Stabilisierungselement 26a die Führungseinheit 16a bei einer Bearbeitung eines Werkstücks in einem Teilbereich der Führungseinheit 16a, der bei einer Bearbeitung eines Werkstücks, entlang der Schneidrichtung 62a des Schneidstrangs 14a betrachtet, zwischen der Kopplungsvorrichtung 12a und einer Oberfläche eines zu bearbeitenden Werkstücks angeordnet ist. Hierbei wirken bei einer Bearbeitung eines Werkstücks mittels der Abstützfläche 24a des Stabilisierungselements 22a und mittels der weiteren Abstützfläche 28a des weiteren Stabilisierungselements 26a Stützkräfte entlang der zumindest im Wesentlichen senkrecht zur Schneidebene des Schneidstrangs 14a verlaufenden Richtung 54a auf die Führungseinheit 16a der Werkzeugmaschinentrennvorrichtung 18a.

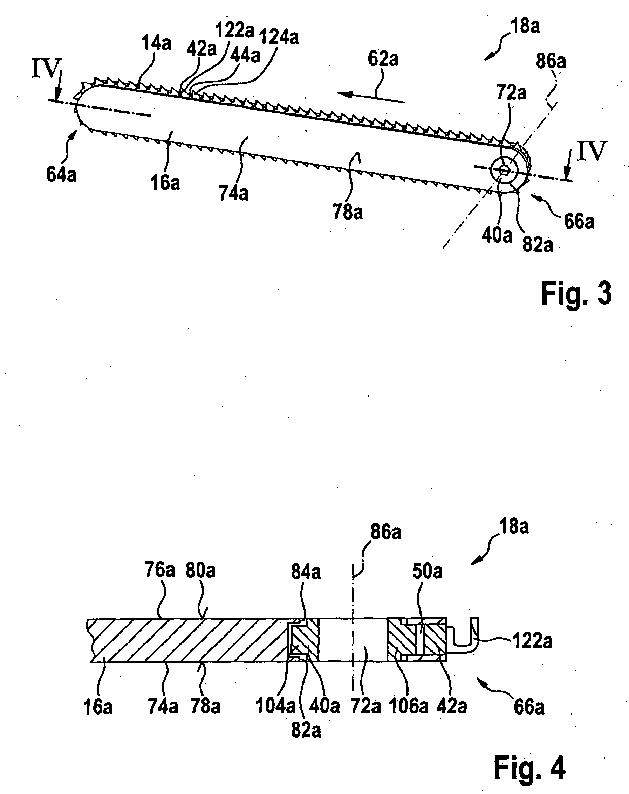

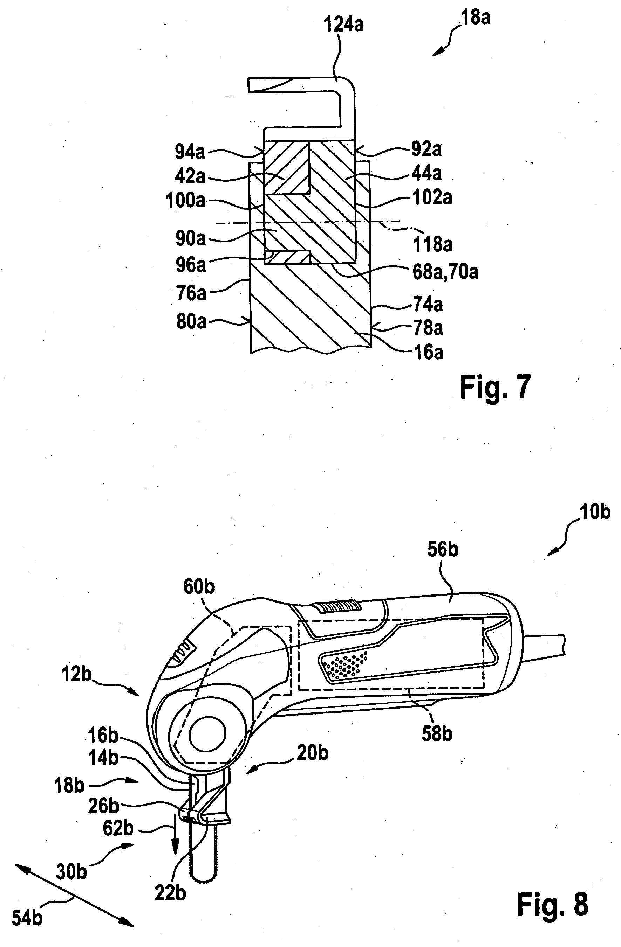

Figur 3 zeigt die Werkzeugmaschinentrennvorrichtung 18a in einem von der Kopplungsvorrichtung 12a der tragbaren Werkzeugmaschine 10a entkoppelten Zustand. Die Werkzeugmaschinentrennvorrichtung 18a weist den Schneidstrang 14a und die Führungseinheit 16a auf, die zusammen ein geschlossenes System bilden. Die Führungseinheit 16a ist als Schwert ausgebildet. Ferner weist die Führungseinheit 16a, in der Schneidebene des Schneidstrangs 14a betrachtet, zumindest zwei konvex ausgebildete Enden 64a, 66a auf. Die konvex ausgebildeten Enden 64a, 66a der Führungseinheit 16a sind an zwei sich abgewandten Seiten der Führungseinheit 16a angeordnet. Der Schneidstrang 14a wird mittels der Führungseinheit 16a geführt. Hierzu weist die Führungseinheit 16a zumindest ein Führungselement 68a (Figur 7) auf, mittels dessen der Schneidstrang 14a geführt wird. Das Führungselement 68a ist hierbei als Führungsnut 70a ausgebildet, die sich in der Schneidebene des Schneidstrangs 14a entlang eines gesamten Umfangs der Führungseinheit 16a erstreckt. Hierbei wird der Schneidstrang 14a mittels die Führungsnut 70a begrenzenden Randbereichen der Führungseinheit 16a geführt. Es ist jedoch auch denkbar, dass das Führungselement 68a in einer anderen, einem Fachmann als sinnvoll erscheinenden Art und Weise, wie beispielsweise als rippenartige Anformung an der Führungseinheit 16a, die in eine Ausnehmung an dem Schneidstrang 14a eingreift, ausgebildet ist. Der Schneidstrang 14a wird, in einer senkrecht zur Schneidebene verlaufenden Ebene betrachtet, von drei Seiten von den die Führungsnut 70a begrenzenden Randbereichen umgeben (Figur 7). Der Schneidstrang 14a wird während eines Betriebs umlaufend entlang des Umfangs in der Führungsnut 70a relativ zur Führungseinheit 16a bewegt.

Des Weiteren weist die Werkzeugmaschinentrennvorrichtung 18a ein mittels der Führungseinheit 16a zumindest teilweise gelagertes Drehmomentübertragungselement 40a zum Antrieb des Schneidstrangs 14a auf. Hierbei weist das Drehmomentübertragungselement 40a eine Kopplungsausnehmung 72a auf, die in einem montierten Zustand mit der Antriebseinheit 58a und/oder der Getriebeeinheit 60a koppelbar ist. Die Kopplungsausnehmung 72a ist konzentrisch im Drehmomentübertragungselement 40a angeordnet. Die Kopplungsausnehmung 72a ist als Innensechskant ausgebildet. Es ist jedoch auch denkbar, dass die Kopplungsausnehmung 72a eine andere, einem Fachmann als sinnvoll erscheinende Ausgestaltung aufweist. In einem ungekoppelten Zustand des Drehmomentübertragungselements 40a mit der Antriebseinheit 58a und/oder der Getriebeeinheit 60a ist das Drehmomentübertragungselement 40a quer zur Schneidrichtung 62a des Schneidstrangs 14a und/oder entlang der Schneidrichtung 62a in der Führungseinheit 16a beweglich angeordnet (Figur 4). Hierbei ist das Drehmomentübertragungselement 40a zumindest teilweise zwischen zwei Außenwänden 74a, 76a der Führungseinheit 16a angeordnet. Die Außenwände 74a, 76a verlaufen zumindest im Wesentlichen parallel zur Schneidebene des Schneidstrangs 14a. Die Führungseinheit 16a weist in Außenflächen 78a, 80a der Außenwände 74a, 76a jeweils eine Ausnehmung 82a, 84a auf, in der das Drehmomentübertragungselement 40a zumindest teilweise angeordnet ist.

Das Drehmomentübertragungselement 40a ist mit einem Teilbereich in den Ausnehmungen 82a, 84a der Außenwände 74a, 76a angeordnet. Das Drehmomentübertragungselement 40a weist hierbei zumindest in dem in den Ausnehmungen 82a, 84a angeordneten Teilbereich eine Erstreckung entlang einer Rotationsachse 86a des Drehmomentübertragungselements 40a auf, die bündig mit einer der Außenflächen 78a, 80a der Führungseinheit 16a abschließt. Ferner weist der in den Ausnehmungen 82a, 84a der Außenflächen 78a, 80a der Führungseinheit 16a angeordnete Teilbereich des Drehmomentübertragungselements 40a eine sich zumindest im Wesentlichen senkrecht zur Rotationsachse 86a des Drehmomentübertragungselements 40a erstreckende Außenabmessung auf, die zumindest 0,1 mm kleiner ist als eine sich zumindest im Wesentlichen senkrecht zur Rotationsachse 86a des Drehmomentübertragungselements 40a erstreckende Innenabmessung der Ausnehmungen 82a, 84a. Der in den Ausnehmungen 82a, 84a angeordnete Teilbereich des Drehmomentübertragungselements 40a ist entlang einer senkrecht zur Rotationsachse 86a verlaufenden Richtung jeweils beabstandet zu einem die jeweilige Ausnehmung 82a, 84a begrenzenden Rand der Außenwände 74a, 76a angeordnet. Somit weist der in den Ausnehmungen 82a, 84a angeordnete Teilbereich des Drehmomentübertragungselements 40a ein Spiel innerhalb der Ausnehmungen 82a, 84a auf.

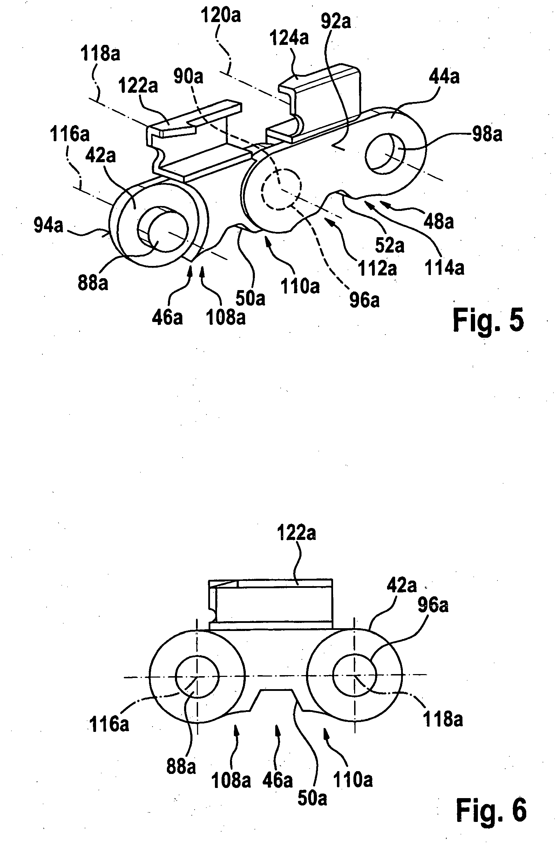

Figur 5 zeigt eine Detailansicht von Schneidenträgerelementen 42a, 44a des Schneidstrangs 14a der Werkzeugmaschinentrennvorrichtung 18a. Der Schneidstrang 14a umfasst eine Vielzahl miteinander verbundener Schneidenträgerelemente 42a, 44a, die jeweils mittels eines Verbindungselements 88a, 90a des Schneidstrangs 14a miteinander verbunden sind, das zumindest im Wesentlichen bündig mit einer von zwei Außenflächen 92a, 94a eines der miteinander verbundenen Schneidenträgerelemente 42a, 44a abschließt (vgl. auch Figur 7). Die Verbindungselemente 88a, 90a sind bolzenförmig ausgebildet. Die Außenflächen 92a, 94a verlaufen in einem in der Führungsnut 70a angeordneten Zustand des Schneidstrangs 14a zumindest im Wesentlichen parallel zur Schneidebene des Schneidstrangs 14a. Ein Fachmann wird je nach Anwendungsfall eine für den Schneidstrang 14a geeignete Anzahl an Schneidenträgerelementen 42a, 44a auswählen. Die Schneidenträgerelemente 42a, 44a sind jeweils einstückig mit einem der Verbindungselemente 88a, 90a ausgebildet. Ferner weisen die Schneidenträgerelemente 42a, 44a jeweils eine Verbindungsausnehmung 96a, 98a zur Aufnahme eines der Verbindungselemente 88a, 90a der miteinander verbundenen Schneidenträgerelemente 42a, 44a auf. Die Verbindungselemente 88a, 90a sind mittels der Führungseinheit 16a geführt (Figur 7). Hierbei sind die Verbindungselemente 88a, 90a in einem montierten Zustand des Schneidstrangs 16a in der Führungsnut 70a angeordnet. Die Verbindungselemente 88a, 90a können sich, in einer senkrecht zur Schneidebene verlaufenden Ebene betrachtet, an zwei Seitenwänden 100a, 102a der Führungsnut 70a abstützen. Die Seitenwände 100a, 102a begrenzen die Führungsnut 70a entlang einer senkrecht zur Schneidebene verlaufenden Richtung. Ferner erstrecken sich die Seitenwände 100a, 102a der Führungsnut 70a, in der Schneidebene betrachtet, ausgehend von der Führungseinheit 16a senkrecht zur Schneidrichtung 62a des Schneidstrangs 14a nach außen.

Die Schneidenträgerelemente 42a, 44a des Schneidstrangs 14a weisen jeweils eine Ausnehmung 50a, 52a auf, die jeweils in einem montierten Zustand auf einer dem Drehmomentübertragungselement 40a zugewandten Seite 46a, 48a des jeweiligen Schneidenträgerelements 42a, 44a angeordnet ist. Das Drehmomentübertragungselement 40a greift in zumindest einem Betriebszustand zum Antrieb des Schneidstrangs 14a in die Ausnehmungen 50a, 52a ein. Das Drehmomentübertragungselement 40a ist hierbei als Zahnrad ausgebildet. Somit umfasst das Drehmomentübertragungselement 40a Zähne 104a, 106a (Figur 4), die dazu vorgesehen sind, in zumindest einem Betriebszustand zum Antrieb des Schneidstrangs 14a in die Ausnehmungen 50a, 52a der Schneidenträgerelemente 42a, 44a einzugreifen. Ferner sind die dem Drehmomentübertragungselement 40a zugewandten Seiten 46a, 48a der Schneidenträgerelemente 42a, 44a kreisbogenförmig ausgebildet. Die dem Drehmomentübertragungselement 40a in einem montierten Zustand zugewandten Seiten 46a, 48a der Schneidenträgerelemente 42a, 44a sind jeweils in Teilbereichen 108a, 110a, 112a, 114a, zwischen einer Mittelachse 116a des jeweiligen Verbindungselements 88a, 90a und einer Mittelachse 118a, 120a der jeweiligen Verbindungsausnehmung 96a, 98a betrachtet, kreisbogenförmig ausgestaltet. Die kreisbogenförmigen Teilbereiche 108a, 110a, 112a, 114a sind jeweils angrenzend an die Ausnehmungen 50a, 52a, in die das Drehmomentübertragungselement 40a eingreift, ausgebildet. Hierbei weisen die kreisbogenförmigen Teilbereiche 108a, 110a, 112a, 114a einen Radius auf, der einem Radius eines Verlaufs der Führungsnut 70a an den konvexen Enden 64a, 66a entspricht. Die Teilbereiche 108a, 110a, 112a, 114a sind konkav ausgebildet (Figur 6).

Ferner weist der Schneidstrang 14a eine Vielzahl an Schneidelementen 122a, 124a auf. Die Schneidelemente 122a, 124a sind jeweils einstückig mit einem der Schneidenträgerelemente 42a, 44a ausgebildet. Eine Anzahl der Schneidelemente 122a, 124a ist abhängig von einer Anzahl an Schneidenträgerelementen 42a, 44a. Ein Fachmann wird je nach Anzahl an Schneidenträgerelementen 42a, 44a eine geeignete Anzahl an Schneidelementen 122a, 124a auswählen. Die Schneidelemente 122a, 124a sind dazu vorgesehen, ein Abtrennen und/oder ein Abtragen von Werkstoffteilchen eines zu bearbeitenden Werkstücks (hier nicht näher dargestellt) zu ermöglichen. Die Schneidelemente 122a, 124a können beispielsweise als Vollmeißel, Halbmeißel oder andere, einem Fachmann als sinnvoll erscheinende Schneidenarten ausgebildet sein, die dazu vorgesehen sind, ein Abtrennen und/oder ein Abtragen von Werkstoffteilchen eines zu bearbeitenden Werkstücks zu ermöglichen. Der Schneidstrang 14a ist endlos ausgebildet. Somit ist der Schneidstrang 14a als Schneidkette ausgebildet. Die Schneidenträgerelemente 42a, 44a sind hierbei als Kettenglieder ausgebildet, die mittels der bolzenförmigen Verbindungselemente 88a, 90a miteinander verbunden sind. Es ist jedoch auch denkbar, dass der Schneidstrang 14a, die Schneidenträgerelemente 42a, 44a und/oder die Verbindungselemente 88a, 90a in einer anderen, einem Fachmann als sinnvoll erscheinenden Art und Weise ausgestaltet sind.

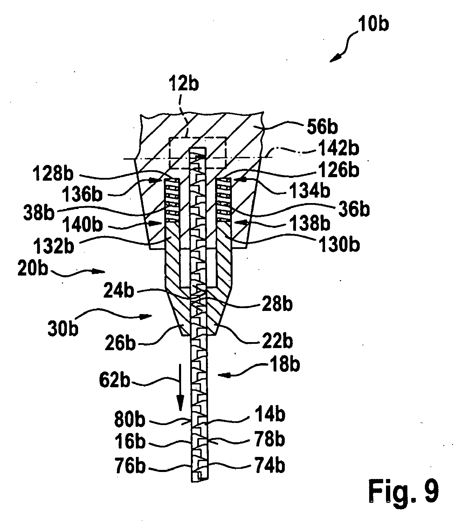

In Figuren 8 und 9 ist ein erfindungsgemäßes Ausführungsbeispiel dargestellt. Im Wesentlichen gleichbleibende Bauteile, Merkmale und Funktionen sind grundsätzlich mit den gleichen Bezugszeichen beziffert. Zur Unterscheidung sind den Bezugszeichen die Buchstaben a und b hinzugefügt. Die nachfolgende Beschreibung beschränkt sich im Wesentlichen auf die Unterschiede zu der nicht erfindungsgemäßen tragbaren Werkzeugmaschine in den Figuren 1 bis 7, wobei bezüglich gleichbleibender Bauteile, Merkmale und Funktionen auf die Beschreibung der nicht erfindungsgemäßen tragbaren Werkzeugmaschine in den Figuren 1 bis 7 verwiesen werden kann.

Figur 9 zeigt eine erfindungsgemäße tragbare Werkzeugmaschine 10b mit einer Werkzeugmaschinentrennvorrichtung 18b, die zusammen ein erfindungsgemäßes Werkzeugmaschinensystem bilden. Die Werkzeugmaschinentrennvorrichtung 18b weist einen zu der in den Figuren 1 bis 7 beschriebenen Werkzeugmaschinentrennvorrichtung 18a analogen Aufbau auf. Die tragbare Werkzeugmaschine 10b weist eine Kopplungsvorrichtung 12b auf, die mit der aus einem Schneidstrang 14b und einer Führungseinheit 16b gebildeten Werkzeugmaschinentrennvorrichtung 18b koppelbar ist. Zudem umfasst die tragbare Werkzeugmaschine 10b eine Werkzeugstabilisierungsvorrichtung 20b. Die Werkzeugstabilisierungsvorrichtung 20b ist hierbei an einem Werkzeugmaschinengehäuse 56b der tragbaren Werkzeugmaschine 10b linear beweglich gelagert. Das Werkzeugmaschinengehäuse 56b weist zwei Führungsausnehmungen 126b, 128b auf, in der zwei Führungselemente 130b, 132b der Werkzeugstabilisierungsvorrichtung 20b in einem montierten Zustand beweglich relativ zum Werkzeugmaschinengehäuse 56b angeordnet sind (Figur 9). Die Führungselemente 126b, 128b sind einstückig mit einem Stabilisierungselement 22b und einem weiteren Stabilisierungselement 26b der Werkzeugstabilisierungsvorrichtung 20b ausgebildet. Die Führungsausnehmungen 126b, 128b verlaufen in einem gekoppelten Zustand der Werkzeugmaschinentrennvorrichtung 18b mit der Kopplungsvorrichtung 12b in zwei zumindest im Wesentlichen parallel versetzt zu einer Schneidebene des Schneidstrangs 14b angeordneten Ebenen. Zur Sicherung der Führungselemente 130b, 132b gegen ein Herausfallen aus den Führungsausnehmungen 126b, 128b sind die Führungselemente 130b, 132b beispielsweise mittels Gewindebolzen (hier nicht näher dargestellt), die in ein Langloch (hier nicht näher dargestellt) der Führungselemente 130b, 132b eingreifen, in den Führungsausnehmungen 126b, 128b gesichert. Es ist jedoch auch denkbar, dass die Führungselemente 130b, 132b mittels anderer, einem Fachmann als sinnvoll erscheinenden Sicherungselementen gegen ein Herausfallen gesichert sind. Die Führungsausnehmungen 126b, 128b weisen entlang einer Längsbewegungsrichtung der Führungselemente 130b, 132b, entlang der die Führungselemente 130b, 132b linear beweglich in den Führungsausnehmungen 126b, 128b angeordnet sind, eine größere Erstreckung auf, als die Führungselemente 130b, 132b.

Ferner umfasst die Werkzeugstabilisierungsvorrichtung 20b zwei Federelemente 36b, 38b, die dazu vorgesehen, sind, das Stabilisierungselement 22b und das weitere Stabilisierungselement 26b in eine von dem Werkzeugmaschinengehäuse 56b abgewandte Richtung mit einer Federkraft zu beaufschlagen. Die Federelemente 36b, 38b sind hierbei in den Führungsausnehmungen 126b, 128b angeordnet. Somit stützen sich die Federelemente 36b, 38b jeweils mit einem Ende 134b, 136b der Federelemente 36b, 38b an einem die jeweilige Führungsausnehmung 126b, 128b begrenzenden Randbereich des Werkzeugmaschinengehäuses 56b ab. Mit einem weiteren Ende 138b, 140b der Federelemente 36b, 38b stützen sich die Federelemente 36b, 38b jeweils an einer dem jeweiligen Federelement 36b, 38b zugewandten Seite des jeweiligen Führungselements 130b, 132b ab. Die Federelemente 36b, 38b sind als Druckfedern ausgebildet. Es ist jedoch auch denkbar, dass die Federelemente 36b, 38b eine andere, einem Fachmann als sinnvoll erscheinende Ausgestaltung aufweisen. Bei einer Bearbeitung eines Werkstücks (hier nicht näher dargestellt) mittels der Werkzeugmaschinentrennvorrichtung 18b können eine Abstützfläche 24b des Stabilisierungselements 22b und eine weitere Abstützfläche 28b des weiteren Stabilisierungselements 26b infolge der beweglichen Lagerung der Führungselemente 130b, 132b und der einstückigen Ausgestaltung mit den Führungselementen 130b, 132b an Außenwänden 74b, 76b der Führungseinheit 16b entlang der Längsbewegungsrichtung der Führungselemente 130b, 132b gleiten. Das Stabilisierungselement 22b und das weiteren Stabilisierungselement 26b werden infolge der Federkraft der Federelemente 36b, 38b bei einer Bearbeitung eines Werkstücks auf eine Oberfläche des Werkstücks gedrückt.

## Patentansprüche

1. Tragbare Werkzeugmaschine, insbesondere Handwerkzeugmaschine, mit einem Werkzeugmaschinengehäuse (56b), mit zumindest einer Kopplungsvorrichtung (12b), die zur Kopplung mit einer zumindest einen Schneidstrang (14b) und zumindest eine Führungseinheit (16b) zur Führung des Schneidstrangs (14b) umfassende Werkzeugmaschinentrennvorrichtung vorgesehen ist, und mit zumindest einer Werkzeugstabilisierungsvorrichtung (20b), die in einem außerhalb der Kopplungsvorrichtung (12b) angeordneten Bereich zumindest ein Stabilisierungselement (22b) mit zumindest einer Abstützfläche (24b) zur Stabilisierung der Werkzeugmaschinentrennvorrichtung aufweist, **dadurch gekennzeichnet, dass** die Werkzeugstabilisierungsvorrichtung (20b) linear beweglich am Werkzeugmaschinengehäuse (56b) gelagert ist und die Werkzeugstabilisierungsvorrichtung (20b) zumindest ein weiteres Stabilisierungselement (26b) mit zumindest einer Abstützfläche (28b) aufweist, das zusammen mit dem Stabilisierungselement (22b) einen Stabilisierungsbereich (30b) begrenzt.

2. Tragbare Werkzeugmaschine nach Anspruch 1,
**dadurch gekennzeichnet, dass** die Werkzeugstabilisierungsvorrichtung (20b) zumindest ein Federelement (36b, 38b) aufweist, das dazu vorgesehen ist, zumindest das Stabilisierungselement (22b) und/oder das weitere Stabilisierungselement (26b) mit einer Federkraft zu beaufschlagen.

3. Werkzeugmaschinensystem mit zumindest einer tragbaren Werkzeugmaschine nach einem der Ansprüche 1 und 2, und mit zumindest einer Werkzeugmaschinentrennvorrichtung, die zumindest einen Schneidstrang (14b) und zumindest eine Führungseinheit (16b) zur Führung des Schneidstrangs (14b), die zumindest zusammen mit dem Schneidstrang (14b) ein geschlossenes System bildet, aufweist, wobei die Werkzeugstabilisierungsvorrichtung (20b) dazu vorgesehen ist, die Werkzeugmaschinentrennvorrichtung in einem mit der Kopplungsvorrichtung (12b) gekoppelten Zustand, entlang einer von der tragbaren Werkzeugmaschine abgewandten Richtung betrachtet, in einem außerhalb der Kopplungsvorrichtung (12b) angeordneten Bereich der Werkzeugmaschinentrennvorrichtung entlang einer zumindest im Wesentlichen senkrecht zu einer Schneidebene des Schneidstrangs (14b) verlaufenden Richtung (54b) zu stabilisieren, und wobei jeweils eine von zwei Außenflächen der Führungseinheit (16b) in einem Teilbereich direkt an jeweils einer der Führungseinheit (16b) zugewandten Seitenwand eines der Stabilisierungselemente (22b; 26b) anliegt, und wobei jede Außenfläche der Führungseinheit (16b) jeweils mit mehr als 10 % eines gesamten Flächeninhalts der Außenfläche der Führungseinheit (16b) an der der Führungseinheit (16b) zugewandten Seitenwand eines der Stabilisierungselemente (22b; 26b) anliegt.

## Claims

1. Portable power tool, in particular hand-held power tool, having a power-tool housing (56b), having at least one coupling device (12b), which is provided for coupling to a power-tool parting device that comprises at least one cutting strand (14b) and at least one guide unit (16b) for guiding the cutting strand (14b), and having at least one tool stabilization device (20b), which, in a region disposed outside of the coupling device (12b), has at least one stabilization element (22b) that has at least one support face (24b) for stabilizing the power-tool parting device,
**characterized in that** the tool stabilization device (20b) is mounted so as to be movable linearly on the power-tool housing (56b) and the tool stabilization device (20b) has at least one further stabilization element (26b), which has at least one support face (28b) and which, together with the stabilization element (22b), delimits a stabilization region (30b).

2. Portable power tool according to Claim 1,
**characterized in that** the tool stabilization device (20b) has at least one spring element (36b, 38b), which is provided to exert a spring force upon at least the stabilization element (22b) and/or the further stabilization element (26b).

3. Power-tool system having at least one portable power tool according to either of Claims 1 and 2, and having at least one power-tool parting device which has at least one cutting strand (14b) and at least one guide unit (16b) for guiding the cutting strand (14b) that, at least together with the cutting strand (14b), constitutes a closed system, wherein the tool stabilization device (20b) is provided to stabilize the power-tool parting device, when coupled to the coupling device (12b), as viewed along a direction that faces away from the portable power tool, in a region of the power-tool parting device disposed outside of the coupling device (12b), along a direction (54b) that runs at least substantially perpendicularly in relation to a cutting plane of the cutting strand (14b), and wherein respectively one of two outer faces of the guide unit (16b) bears directly, in a partial region, against a respective side wall of one of the stabilization elements (22b; 26b) that faces toward the guide unit (16b), and wherein each outer face of the guide unit (16b) bears against the side wall of one of the stabilization elements (22b; 26b) that faces toward the guide unit (16b) by, in each case, more than 10 % of a total surface area of the outer face of the guide unit (16b).

## Revendications

1. Machine-outil portative, en particulier machine-outil à main comprenant un boîtier de machine-outil (56b), avec au moins un dispositif d'accouplement (12b) qui est prévu pour l'accouplement avec un dispositif de coupe de machine-outil comprenant au moins un tronçon de coupe (14b) et au moins une unité de guidage (16b) pour guider le tronçon de coupe (14b) et comprenant au moins un dispositif de stabilisation d'outil (20b) qui, dans une région disposée à l'extérieur du dispositif d'accouplement (12b), présente au moins un élément de stabilisation (22b) avec au moins une surface d'appui (24b) pour stabiliser le dispositif de coupe de machine-outil, **caractérisée en ce que** le dispositif de stabilisation d'outil (20b) est supporté de manière déplaçable linéairement sur le boîtier de machine-outil (56b) et le dispositif de stabilisation d'outil (20b) présente au moins un élément de stabilisation supplémentaire (26b) avec au moins une surface d'appui (28b) qui, conjointement avec l'élément de stabilisation (22b), délimite une région de stabilisation (30b).

2. Machine-outil portative selon la revendication 1, **caractérisée en ce que** le dispositif de stabilisation d'outil (20b) présente au moins un élément de ressort (36b, 38b) qui est prévu pour solliciter au moins l'élément de stabilisation (22b) et/ou l'élément de stabilisation supplémentaire (26b) avec une force de ressort.

3. Système de machine-outil comprenant au moins une machine-outil portative selon l'une quelconque des revendications 1 et 2, et comprenant au moins un dispositif de coupe de machine-outil qui présente au moins un tronçon de coupe (14b) et au moins une unité de guidage (16b) pour guider le tronçon de coupe (14b), qui forme au moins, conjointement avec le tronçon de coupe (14b), un système fermé, le dispositif de stabilisation d'outil (20b) étant prévu pour stabiliser le dispositif de coupe de machine-outil dans un état accouplé au dispositif d'accouplement (12b), considéré le long d'une direction opposée à la machine-outil portative, dans une région du dispositif de coupe de machine-outil disposée à l'extérieur du dispositif d'accouplement (12b) le long d'une direction (54b) s'étendant au moins sensiblement perpendiculairement à un plan de coupe du tronçon de coupe (14b) et à chaque fois une de deux surfaces extérieures de l'unité de guidage (16b) s'appliquant, dans une région partielle, directement contre une paroi latérale de l'un des éléments de stabilisation (22b ; 26b) tournée vers l'unité de guidage (16b), et chaque surface extérieure de l'unité de guidage (16b) s'appliquant à chaque fois avec plus de 10 % d'une proportion de surface totale de la surface extérieure de l'unité de guidage (16b) contre la paroi latérale de l'un des éléments de stabilisation (22b ; 26b) tournée vers l'unité de guidage (16b).
